# EUROPÄISCHE PATENTSCHRIFT

(11) **EP 2 024 715 B1**
(45) Veröffentlichungstag und Bekanntmachung des Hinweises auf die Patenterteilung: **14.09.2016**
(21) Anmeldenummer: 07729896.6
(22) Anmeldetag: 05.06.2007
(51) Int. Cl.: G01F 1/60

(54) **VERFAHREN UND VORRICHTUNG ZUR BESTIMMUNG DES VOLUMEN- ODER MASSESTROMS**
METHOD AND APPARATUS FOR DETERMINING THE VOLUME OR MASS FLOW
PROCÉDÉ ET DISPOSITIF POUR DÉTERMINER LE DÉBIT VOLUMIQUE OU MASSIQUE

(30) Priorität: 07.06.2006 DE 102006026772
(43) Veröffentlichungstag der Anmeldung: 18.02.2009
(73) Patentinhaber: Endress + Hauser Flowtec AG, 4153 Reinach BL 1 (CH)
(72) Erfinder: KAPPERTZ, Fred, 4146 Hochwald (CH); RÜFENACHT, Markus, 4143 Dornach (CH)
(74) Vertreter: Andres, Angelika Maria
(86) Internationale Anmeldenummer: PCT/EP2007/055516
(87) Internationale Veröffentlichungsnummer: WO 2007/141266

(56) Entgegenhaltungen:
- DE-A1- 19 917 268
- US-A- 4 408 497

## Beschreibung

Die Erfindung betrifft ein Verfahren und eine Vorrichtung zur Bestimmung des Volumen- oder Massestroms eines Mediums, das durch ein magnetisch-induktives Durchflussmessgerät mit einer vorgegebenen Nennweite strömt.

Die Kalibrierung eines magnetisch-induktiven Durchflussmessgeräts wird üblicherweise mit Wasser als Referenzmedium durchgeführt. Wasser ist leicht diamagnetisch, wobei die magnetische Leitfähigkeit bzw. die magnetische Suszeptibilität von Wasser relativ gering ist. Wird das entsprechend geeichte Durchflussmessgerät bzw. der entsprechend geeichte Gerätetyp zu einem späteren Zeitpunkt während des Einsatzes im Feld von einem Medium durchströmt, das eine hohe magnetische Leitfähigkeit besitzt - dies ist beispielsweise der Fall, wenn das Medium ferromagnetische Anteile und folglich eine sehr hohe Suszeptibilität aufweist - so sind die Messwerte erheblich verfälscht, da das magnetisch-leitfähige Medium den magnetischen Widerstand der Messanordnung ganz erheblich beeinflusst. Bei dem magnetisch-leitfähigen Medium handelt es sich z.B. um Wasser mit Zusätzen von Magnetit. Bei derartigen Messungen treten Messfehler von bis zu 100% auf. Eine verlässliche und reproduzierbare Messung des Volumen- oder Massestroms ist bei derartig großen Messfehlern natürlich nicht mehr möglich.

In der US 4 408 497 A ist ein Verfahren zur Bestimmung des Volumen- oder Massestroms eines Mediums, welches durch ein magnetisch-induktives Durchflussmessgerät strömt, angegeben. Dabei wird das Durchflussmessgerät mit einem periodisch alternierenden Magnetfeld beaufschlagt und die aktuelle Zeit bis zum Erreichen eines konstanten Betrags des gemessenen Magnetfelds bestimmt. Um eine Durchflussrate zu ermitteln, welche unabhängig von der magnetischen Permeabilität des Mediums ist, wird eine Korrektur benutzt. Bei der Bestimmung der Korrektur wird anhand vereinfachter Annahmen ein Zusammenhang zwischen der Anstiegszeit, der Induktivität und der magnetischen Permeabilität zugrunde gelegt.

Die DE 199 17 268 A1 offenbart ein Verfahren zum Überprüfen eine magnetisch-induktiven Durchflussmessgeräts, wobei die Anstiegszeit bis zum Erreichen eines vorgegebenen Stromwerts mit einem Referenzwert verglichen wird. Eine Abweichung vom Referenzwert wird dabei als ein Hinweis auf eine Änderung der magnetischen Eigenschaften bzw. als ein Messfehler interpretiert.

Im Stand der Technik ist dagegen nicht bekannt, dass bei der Bestimmung des Volumen- oder Massenstroms mit einem magnetisch-induktiven Durchflussmessgerät anhand einer Abweichung der aktuellen Anstiegszeit von einer Soll-Anstiegszeit ein Messfehler des gemessenen Volumen- oder Massestroms des magnetisch-leitfähigen Mediums ein Messfehler bestimmt und kompensiert wird.

Der Erfindung liegt die Aufgabe zugrunde, ein Verfahren und eine Vorrichtung zur präzisen Bestimmung des Volumen- oder Massestroms eines magnetisch-leitfähigen Mediums vorzuschlagen.

Die Aufgabe wird bezüglich des Verfahrens dadurch gelöst, dass das Durchflussmessgerät mit einem periodisch alternierenden Magnetfeld beaufschlagt wird, dass die aktuelle Anstiegszeit bis zum Erreichen eines konstanten Betrags des Mess-Magnetfeldes bestimmt wird, dass die aktuelle Anstiegszeit mit einer Soll-Anstiegszeit, welche beim Durchfluss eines Referenzmediums durch das Durchflussmessgerät ermittelt wird, verglichen wird, und dass anhand einer Abweichung von aktueller Anstiegszeit und Soll-Anstiegszeit ein Messfehler bestimmt und der aktuell gemessene Volumen- oder Massestrom des magnetisch-leitfähigen Mediums so korrigiert wird, dass der Messfehler kompensiert wird. Eine außerhalb vorgegebener Toleranzen liegende Abweichung zwischen der IST-Anstiegszeit und der SOLL-Anstiegszeit wird also dahingehend interpretiert, dass das Durchflussmessgerät von einem Medium mit einer hohen magnetischen Leitfähigkeit durchströmt wird.

Das erfindungsgemäße Verfahren nutzt den Umstand aus, dass eine ausgeprägte funktionale Beziehung zwischen der Anstiegszeit des Magnetfeldes und der magnetischen Leitfähigkeit des durch das Durchflussmessgerät strömenden Mediums besteht. Ist das Medium magnetisch leitfähig, so erhöht sich infolge des gesteigerten magnetischen Widerstandes die Anstiegszeit des Magnetfeldes bzw. des Spulenstroms bis zum Erreichen eines konstanten Magnetfeldes, bei dem die Messung des Volumen- oder Massestroms erfolgt. In erster Näherung ist die Anstiegszeit proportional zur magnetischen Leitfähigkeit des Mediums: Je größer die magnetische Leitfähigkeit ist, um so länger ist die Anstiegszeit.

Zur Erhöhung der Messgenauigkeit kann weiterhin vorgesehen sein, dass die funktionale Abhängigkeit zwischen der magnetischen Leitfähigkeit und der Anstiegszeit für jeden Gerätetyp ermittelt wird. Die entsprechende funktionale Beziehung wird erfindungsgemäß vorab ermittelt; anhand einer gemessenen Abweichung der IST-Anstiegszeit von der SOLL-Anstiegszeit bis zum Erreichen eines konstanten Magnetfeldes wird der Messfehler ermittelt; ein entsprechend korrigierter Messwert wird anschließend ausgegeben.

Gemäß einer vorteilhaften Ausgestaltung des erfindungsgemäßen Verfahrens wird die Soll-Anstiegszeit während einer Kalibrierphase ermittelt. Insbesondere wird die Soll-Anstiegszeit während der Kalibrierphase in Abhängigkeit von einem magnetisch nur schwach leitfähigen Medium und/oder in Abhängigkeit von dem Durchflussmesssystem, bestehend aus einem Messrohr und einem Magnetsystem, bestimmt wird. Während im ersten Fall die Ermittlung der Soll-Anstiegszeit nur mediumsabhängig ist, ist sie also im zweiten Fall ggf. auch abhängig vom Gerätetyp. Wesentliche Größen des Gerätetyps sind die Nennweite, das Material des Messrohres sowie das verwendete Magnetsystem.

Das Regelverfahren, das zur Umschaltung des Magnetfelds genutzt wird, kann prinzipiell beliebig sein. Günstig ist es natürlich, ein Verfahren einzusetzen, bei dem die Soll-Anstiegszeit und nachfolgend dann auch die Ist-Anstiegszeit möglichst kurz sind, da dann das Messintervall relativ lang ist. Die einfachste Methode besteht darin, eine Spannung an das Magnetsystem anzulegen, und die SOLL-Anstiegszeit durch die Zeitspanne zu definieren, bis das Magnetfeld bzw. der durch das Magnetsystem fließende Spulenstrom einen zumindest näherungsweise konstanten Wert annimmt. Bei einem idealen Magnetsystem bzw. bei einer idealen Spulenanordnung würde der z.B. rechteckförmige Stromverlauf dem Verlauf des von der Spulenanordnung erzeugten Magnetfeldes entsprechen. Üblicherweise besitzen die Spulenanordnungen, die bei magnetisch-induktiven Durchflussmessgeräten zum Einsatz kommen, Spulenkerne und/oder Polschuhe auf. Die Regel-/Auswerteeinheit beaufschlagt die beiden Spulenanordnungen mit einem periodisch alternierenden Strom, der idealerweise in zwei Halbperioden konstant, entgegengesetzt und betragsgleich ist. Aufgrund von in den Polschuhen und den Kernen auftretenden Wirbelströmen ist zwar der geregelte Strom, nicht aber das erzeugte Magnetfeld konstant. Daher braucht es eine definierte Zeit, die sog. Anstiegszeit, bis das Magnetfeld den angestrebten konstanten Wert erreicht hat. Erst dann ist es möglich, eine genaue Messung des Volumen- bzw. Massestroms durchzuführen. Wie bereits erwähnt, ist es für eine genaue Messung vorteilhaft, wenn pro Umschaltung eine möglichst lange Messzeit zur Verfügung steht. Insofern ist es wichtig, die Anstiegszeit zu minimieren.

In diesem Zusammenhang schlägt ein bekanntes Regelverfahren vor, beim Umschalten des Magnetfeldes kurzzeitig einen überhöhten Strom durch die Magnetanordnung zu schicken. Der Strom ist idealerweise so bemessen, dass die auftretenden Wirbelströme kompensiert werden. Weiterhin ist es bekannt geworden, die nachfolgende asymptotische Annäherung an das konstante Mess-Magnetfeld durch Anlegen einer kurzzeitigen Gegenspannung an die Spulenanordnung zu beschleunigen.

Bezüglich des erfindungsgemäßen Verfahrens schlägt eine vorteilhafte Weiterbildung vor, dass anhand der aktuellen Anstiegszeit und der Soll-Anstiegszeit ein Korrekturfaktor ermittelt wird, mit dem der aktuell bestimmte Volumen- oder Massestrom korrigiert wird.

Wie bereits an vorhergehender Stelle erwähnt, wird als Referenzmedium bevorzugt ein magnetisch nur schwach leitfähiges Medium verwendet. Insbesondere handelt es sich bei dem verwendeten Referenzmedium um Wasser.

Eine Weiterbildung des erfindungsgemäßen Verfahrens sieht vor, dass die aktuelle Anstiegszeit über mehrere Perioden des periodisch alternierenden Magnetfeldes gemittelt wird. Bevorzugt wird aus n Werten ein Mittelwert gebildet.

Erfindungsgemäß ist es möglich, dem Anwender neben einem korrekten Messwert hinsichtlich des Volumen- oder Massestroms des Mediums durch das Durchflussmessgerät auch Information über den Anteil eines magnetisch-leitfähigen Materials in dem Medium zu vermitteln. Somit wird also durch einen Vergleich der aktuellen Anstiegszeit bis zum Erreichen des konstanten Magnetfeldes mit der entsprechenden Soll-Anstiegszeit der Anteil des magnetischen Materials in dem durch das Durchflussmessgerät strömenden Medium bestimmt und ausgegeben. Die Ausgabe erfolgt beispielsweise an einem Bildschirm, einem Drucker oder die Information wird über einen Datenbus oder eine Datenleitung weitergeleitet.

Die der Erfindung zugrunde liegende Aufgabe wird bezüglich der Vorrichtung durch folgende Anordnung gelöst:
- ein Magnetsystem, das ein das Messrohr durchsetzendes, im wesentlichen quer zur Messrohrachse verlaufendes und periodisch die Richtung änderndes Magnetfeld erzeugt;
- zumindest eine mit dem Medium gekoppelten Messelektrode, die in einem Bereich des Messrohres angeordnet ist;
- eine Regel-/Auswerteeinheit, die anhand der in die zumindest eine Messelektrode induzierten Messspannung Information über den Volumen-oder Massestrom des Mediums nach dem Verfahren bestimmt, das in zumindest einem der Verfahrensansprüche 1-8 beschrieben ist. Magnetischinduktive Durchflussmessgeräte als solche sind bestens bekannt. Das erfindungsgemäße Verfahren kann generell in Verbindung mit jedem beliebigen Durchflussmessgerät zum Einsatz kommen.

Die Erfindung wird anhand der nachfolgenden Figuren näher erläutert. Es zeigt:
Fig. 1: eine schematische Darstellung eines magnetisch-induktiven Durchflussmessgeräts zur Durchführung des erfindungsgemäßen Verfahrens,
Fig. 2: eine graphische Darstellung, die die funktionale Abhängigkeit der Anstiegszeit in Abhängigkeit von der magnetischen Leitfähigkeit des durch das Durchflussmessgerät strömenden Mediums charakterisiert, und
Fig. 3: ein Flussdiagramm, das die wesentlichen Schritte des erfindungsgemäßen Verfahrens skizziert.

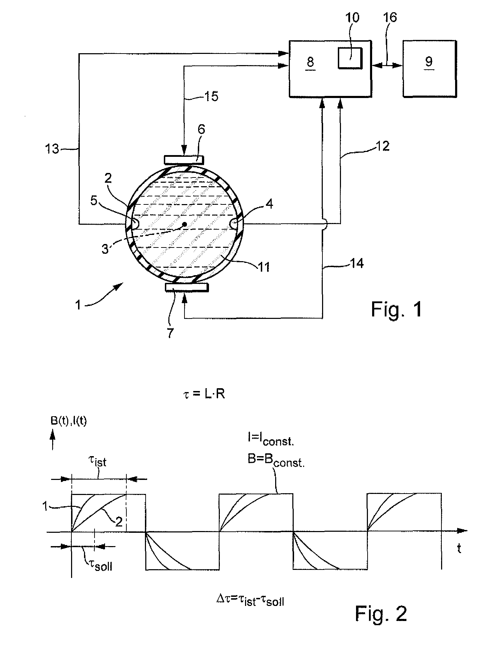

Fig. 1 zeigt eine schematische Darstellung einer ersten Ausgestaltung der erfindungsgemäßen Vorrichtung 1. Das Messrohr 2 wird von dem Medium 11 in Richtung der Messrohrachse 3 durchflossen. Das Medium 11 ist zumindest in geringem Umfang elektrisch leitfähig. Das Messrohr 2 selbst ist aus einem nicht-leitfähigen Material gefertigt, oder es ist zumindest an seiner Innenfläche mit einem nicht-leitfähigen Material ausgekleidet.

Das senkrecht zur Strömungsrichtung des Mediums 11 ausgerichtete Magnetfeld B wird über die diametral angeordnete Spulenanordnung 6, 7 bzw. über zwei Elektromagnete erzeugt. Unter dem Einfluß der Magnetfeldes B wandern in dem Medium 11 befindliche Ladungsträger je nach Polarität zu den beiden entgegengesetzt gepolten Messelektroden 4, 5 ab. Die sich an den Messelektroden 4, 5 aufbauende Messspannung ist proportional zu der über den Querschnitt des Messrohres 2 gemittelten Strömungsgeschwindigkeit des Mediums 11, d. h. sie ist ein Maß für den Volumenstrom des Mediums 11 in dem Messrohr 2. Das Messrohr 2 ist übrigens über Verbindungselemente, z. B. Flansche, die in der Zeichnung nicht gesondert dargestellt sind, mit einem Rohrsystem, durch das das Medium 11 hindurchströmt, verbunden. In den beiden gezeigten Fällen befinden sich die Messelektroden 4, 5 in direktem Kontakt mit dem Medium 11; die Kopplung kann jedoch, wie bereits an vorhergehender Stelle erwähnt, auch kapazitiv erfolgen.

Über Verbindungsleitungen 12, 13 sind die Messelektroden 4, 5 mit der Rege-/Auswerteeinheit 8 verbunden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

Fig. 2 zeigt eine graphische Darstellung, die die funktionale Abhängigkeit der Anstiegszeit *τ_{IST}* in Abhängigkeit von der magnetischen Leitfähigkeit des durch das Durchflussmessgerät 1 strömenden Mediums 11 charakterisiert. Wie bereits an vorhergehender Stelle beschrieben, wird die Umschaltung des Magnetfeldes B(t) üblicherweise über den durch die Spulenanordnung 6, 7 fließenden Strom I(t) geregelt. Der Stromverlauf ist im gezeigten Fall rechteckförmig. Im Idealfall sollte das Magnetfeld B(t) dem Stromverlauf folgen, was aber aufgrund der in den Polschuhen und den Spulenkernen auftretenden Wirbelströme nicht der Fall ist. Vielmehr braucht es eine definierte Anstiegszeit bis das Magnetfeld den gewünschten konstanten Wert Bconst zur Durchführung der Messung erreicht hat.

In Fig. 2 ist die Anstiegszeit *τ_{SOLL}* angegeben. Diese Zeitdauer wurde während der Kalibrierung des Durchflussmessgeräts 1 über das verwendete Regelverfahren zur Umschaltung des Magnetfeldes B(t) ermittelt. Die Kalibrierung erfolgt, indem in dem Durchflussmessgerät 1 zumindest zwei voneinander abweichende, definierte Volumenströme erzeugt werden. Als Kalibriermedium wird üblicherweise Wasser verwendet. Wird das Durchflussmessgerät 1 nachfolgend aber für die Messung des Volumen- bzw. Massestroms von magnetisch-leitfähigen Medien eingesetzt, liefert das Messgeräte 1 sehr stark fehlerbehaftete Messwerte. Dies liegt darin begründet, dass sich der magnetische Widerstand des Durchflussmessgeräts 1 bei Durchfluss eines magnetisch-leitfähigen Mediums 11 ganz erheblich ändern kann. Wie in Fig. 2 dargestellt, ist die aktuelle Anstiegszeit *τ_{IST}* gegenüber der Soll-Anstiegszeit *τ_{SOLL}* erheblich vergrößert. Die Differenz beruht auf dem durch das magnetisch-leitfähige Medium veränderten Magnetsystem. Der Messzyklus wird erst nach Ablauf der IST-Anstiegszeit gestartet.

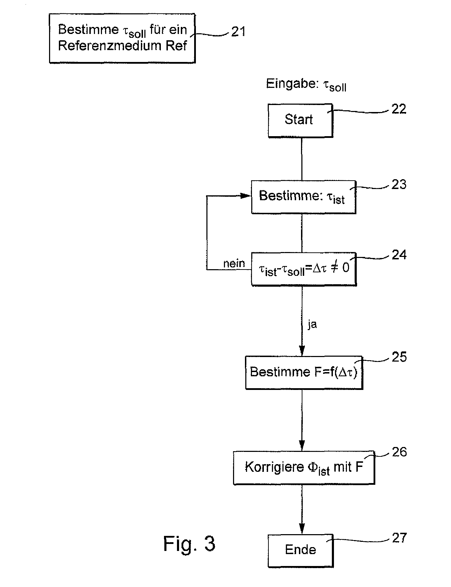

Erfindungsgemäß wird eine außerhalb einer vorgegebenen Toleranz liegende Abweichung zwischen der aktuellen Anstiegszeit *τ_{IST}* und einer vorgegebenen Soll-Anstiegszeit *τ_{SOLL}* dahingehend interpretiert, dass ein Medium durch das Durchflussmessgerät 1 strömt, das eine hohe magnetische Leitfähigkeit aufweist und dass eine entsprechende Korrektur notwendig ist. Im Detail wird die aktuelle Anstiegszeit *τ_{IST}* mit einer Soll-Anstiegszeit *τ_{SOLL}*, welche beim Durchfluss Φ_{Re *f*} eines Referenzmediums Ref durch das Durchflussmessgerät 1 ermittelt wird, verglichen. Anschließend wird anhand einer Abweichung Δ*τ* von aktueller Anstiegszeit *τ_{IST}* und Soll-Anstiegszeit *τ_{SOLL}* ein Messfehler F bestimmt und der aktuell gemessene Volumen- oder Massestrom Φ*_{IST}* des magnetisch-leitfähigen Mediums 11 so korrigiert, dass der Messfehler F kompensiert wird. Hierbei wird der Umstand ausgenutzt, dass der Messfehler F funktional abhängig ist von der Anstiegszeit *τ_{IST}*. Üblicherweise besteht zwischen dem Messfehler und der Anstiegszeit zumindest in erster Näherung eine lineare Abhängigkeit. Das erfindungsgemäße Verfahren ist aus dem in Fig. 3 dargestellten Flussdiagramm ersichtlich.

Während einer Kalibrierphase des magnetisch-induktiven Durchflussmessgeräts 1 wird die Soll-Anstiegszeit *τ_{SOLL}* beim Durchfluss Φ_{Re *f*} eines Referenzmediums Ref durch das Durchflussmessgerät 1 ermittelt (Punkt 21). Während des regulären Messbetriebs des Durchflussmessgeräts 1 wird anschließend die aktuelle Anstiegszeit *τ_{IST}* bis zum Erreichen eines konstanten Betrags des Mess-Magnetfeldes *B_{const.}* bestimmt (Punkt 23). Zeigt sich eine Abweichung Δ*τ* zwischen der aktuellen Anstiegszeit *τ_{IST}* und der Soll-Anstiegszeit *τ_{SOLL}*, so wird anhand der Abweichung ein Messfehler F bestimmt (Punkt 24, Punkt 25). Dies ist möglich, da es sich gezeigt hat, dass zwischen dem Messfehler F und einer Änderung der aktuellen Anstiegszeit *τ_{IST}* zur SOLL-Anstiegszeit *τ_{SOLL}* eine funktionale Abhängigkeit besteht. Anschließend wird der aktuell gemessene Volumen- oder Massestrom Φ*_{IST}* des magnetisch-leitfähigen Mediums 11 so korrigiert wird, dass der Messfehler F kompensiert wird (Punkt 26). Somit ist es möglich, mit dem erfindungsgemäßen Durchflussmessgerät 1 auch den Volumen- oder Massestrom eines Mediums 11 korrekt zu bestimmen, wenn dieses Medium 11 so beschaffen ist, dass es den magnetischen Widerstand des Messsystems erheblich beeinflusst. Dies ist -wie bereits gesagt - der Fall, wenn das Medium 11 eine magnetische Leitfähigkeit aufweist, die sich stark von der magnetischen Leitfähigkeit des Referenzmediums Wasser unterscheidet.

### Bezugszeichenliste

- 1: magnetisch-induktives Durchflussmessgerät
- 2: Messrohr
- 3: Messrohrachse
- 4: Messelektrode
- 5: Messelektrode
- 6: Magnetsystem
- 7: Magnetsystem
- 8: Regel-/Auswerteeinheit
- 9: Eingabe-/Ausgabeeinheit
- 10: Speichereinheit
- 11: Meßmedium
- 12: Verbindungsleitung
- 13: Verbindungsleitung
- 14: Verbindungsleitung
- 15: Verbindungsleitung
- 16: Verbindungsleitung

## Patentansprüche

1. Verfahren zur Bestimmung des Volumen- oder Massestroms eines Mediums (11), das durch ein magnetisch-induktives Durchflussmessgerät (1) mit einer vorgegebenen Nennweite (DN) strömt,
wobei das Durchflussmessgerät (1) mit einem periodisch alternierenden Magnetfeld (B(t)) beaufschlagt wird,
wobei die aktuelle Anstiegszeit (*τ_{IST}*) bis zum Erreichen eines konstanten Betrags des Mess-Magnetfeldes (*B_{const.}*) bestimmt wird,
**dadurch gekennzeichnet, dass**,
die aktuelle Anstiegszeit (*τ_{IST}*) mit einer Soll-Anstiegszeit (*τ_{SOLL}*), welche beim Durchfluss (Φ_{Re *f*}) eines Referenzmediums (Ref) durch das Durchflussmessgerät (1) ermittelt wird, verglichen wird,
wobei eine Abweichung zwischen der aktuellen Anstiegszeit (*τ_{IST}*) und der Soll-Anstiegszeit (*τ_{SOLL}*) als Hinweis auf den Durchfluss eines magnetisch-leitfähigen Mediums (11) interpretiert wird, und
wobei anhand einer Abweichung (Δ*τ*) von aktueller Anstiegszeit (*τ_{IST}*) und Soll-Anstiegszeit (*τ_{SOLL}*) ein von der Abweichung abhängiger Messfehler (F) bestimmt und der aktuell gemessene Volumen- oder Massestrom (Φ*_{IST}*) des magnetisch-leitfähigen Mediums (11) so korrigiert wird, dass der Messfehler (F) kompensiert wird.

2. Verfahren nach Anspruch 1,
wobei die Soll-Anstiegszeit (*τ_{SOLL}*) während einer Kalibrierphase ermittelt wird.

3. Verfahren nach Anspruch 1 oder 2,
wobei die Soll-Anstiegszeit (*τ_{SOLL}*) während der Kalibrierphase in Abhängigkeit von dem magnetisch nicht-leitfähigen Medium 11 und/oder in Abhängigkeit von dem Durchflussmesssystem, bestehend aus einem Messrohr (2) und einem Magnetsystem (6, 7), bestimmt wird.

4. Verfahren nach Anspruch 1,
wobei anhand der aktuellen Anstiegszeit (*τ_{IST}*) und der Soll-Anstiegszeit (*τ_{SOLL}*) ein Korrekturfaktor ermittelt wird, mit dem der aktuell bestimmte Volumen- oder Massestrom (Φ*_{IST}*) korrigiert wird.

5. Verfahren nach Anspruch 1,
wobei als Referenzmedium (Ref) ein magnetisch nicht-leitfähiges Medium verwendet wird.

6. Verfahren nach Anspruch 5,
wobei als Referenzmedium (Ref) Wasser verwendet wird.

7. Verfahren nach Anspruch 1,
wobei die aktuelle Anstiegszeit (*τ_{IST}*) über mehrere Perioden des periodisch alternierenden Magnetfeldes (B(t)) gemittelt wird.

8. Verfahren nach Anspruch 1,
wobei anhand eines Vergleichs der aktuellen Anstiegszeit (*τ_{IST}*) bis zum Erreichen des konstanten Magnetfeldes (*B_{const.}*) mit der entsprechenden Soll-Anstiegszeit (*τ_{SOLL}*) der Anteil des magnetisch-leitfähigen Materials in dem durch das Durchflussmessgerät (1) strömenden Medium (11) bestimmt und ausgegeben wird.

9. Vorrichtung zum Messen des Volumen- oder Massestroms eines magnetisch-leitfähigen Mediums (11), das ein Messrohr (2) in Richtung der Messrohrachse (3) durchströmt, mit einem Magnetsystem (6, 7), das ein das Messrohr (2) durchsetzendes, im wesentlichen quer zur Messrohrachse (3) verlaufendes und periodisch die Richtung änderndes Magnetfeld (B(t)) erzeugt, mit zumindest einer mit dem Medium (11) gekoppelten Messelektrode (4, 5), die in einem Bereich des Messrohres (2) angeordnet ist, und mit einer Regel-/Auswerteeinheit (8),
**dadurch gekennzeichnet, dass**
die Regel-/Auswerteeinheit (8) anhand der in die zumindest eine Messelektrode (4, 5) induzierten Messspannung (U) Information über den Volumen- oder Massestrom (Φ) des Mediums (11) nach dem Verfahren bestimmt, das in zumindest einem der Ansprüche 1-8 beschrieben ist,

## Claims

1. Procedure to determine the volume flow or mass flow of a medium (11), which flows through an electromagnetic flowmeter (1) with a predefined nominal diameter (DN),
wherein the flowmeter (1) is exposed to a periodically alternating magnetic field (B(t)),
wherein the current rise time (*τ_{IST}*) until a constant value of the measurement electromagnetic field (*B_{const.}*) is reached is determined,
**characterized in that**
the current rise time (*τ_{IST}*) is compared against a target rise time (*τ_{SOLL}*) that is determined for the flow (*Φ_{Ref}*) of a reference medium (Ref) through the flowmeter (1),
wherein a deviation between the current rise time (*τ_{IST}*) and the target rise time (*τ_{SOLL}*) is interpreted as an indicator for the flow of a magnetically conductive medium (11), and
wherein a measuring error (F) that depends on the deviation is determined using a deviation (*Δτ*) between the current rise time (*τ_{IST}*) and the target rise time (*τ_{SOLL}*), and the volume flow or mass flow (*Φ_{IST}*) that is currently measured for the magnetically conductive medium (11) is corrected in such a way that the measured error (F) is compensated for.

2. Procedure as claimed in Claim 1,
wherein the target rise time (*τ_{SOLL}*) is determined during a calibration phase.

3. Procedure as claimed in Claim 1 or 2,
wherein the target rise time (*τ_{SOLL}*) is determined during the calibration phase depending on the magnetically non-conductive medium (11) and/or depending on the flowmeter system consisting of a measuring tube (2) and a magnetic system (6, 7).

4. Procedure as claimed in Claim 1,
wherein a correction factor is determined using the current rise time (*τ_{IST}*) and the target rise time (*τ_{SOLL}*), said correction factor being used to correct the volume flow or mass flow (*Φ_{IST}*) currently determined.

5. Procedure as claimed in Claim 1,
wherein a magnetically non-conductive medium is used as the reference medium (Ref).

6. Procedure as claimed in Claim 5,
wherein water is used as the reference medium (Ref).

7. Procedure as claimed in Claim 1,
wherein the current rise time (*τ_{IST}*) is averaged over several periods of the periodically alternating magnetic field (B(t)).

8. Procedure as claimed in Claim 1,
wherein the proportion of the magnetically conductive material in the medium (11) flowing through the flowmeter (1) is determined, and output, by comparing the current rise time (*τ_{IST}*) until a constant magnetic field (*B_{const}.*) is reached against the corresponding target rise time (*τ_{SOLL}).*

9. Apparatus for measuring the volume flow or mass flow of a magnetically conductive medium (11), which flows through a measuring tube (2) in the direction of the measuring tube axis (3), with a magnetic system (6, 7) which generates a magnetic field (B(t)) that passes through the measuring tube (2), is essentially perpendicular to the measuring tube axis (3) and changes direction periodically, with at least one measuring electrode (4, 5) which is coupled with the medium (11) and arranged in a section of the measuring tube (2), and with a control/evaluation unit (8),
**characterized in that**
using the measurement voltage (U) induced in the at least one measuring electrode (4, 5), the control/evaluation unit (8) determines information about the volume flow or mass flow (Φ) of the medium (11) according to the procedure that is described in at least one of the Claims 1 to 8.

## Revendications

1. Procédé destiné à la détermination du débit volumique ou massique d'un produit (11), qui s'écoule à travers un débitmètre magnéto-inductif (1) présentant un diamètre nominal (DN) prédéfini,
pour lequel le débitmètre (1) est soumis à un champ magnétique (B(t)) alternant périodiquement,
pour lequel est déterminé le temps de montée actuel (*τ_{IST}*) jusqu'à l'atteinte d'une valeur constante du champ magnétique de mesure (*B_{const}*.),
**caractérisé**
**en ce que** le temps de montée actuel (*τ_{IST}*) est comparé avec un temps de montée de consigne (*τ_{SOLL}*), lequel est déterminé lors du débit (Φ_{Ref}) d'un produit de référence (Ref) à travers le débitmètre (1),
un écart entre le temps de montée actuel (*τ_{IST}*) et le temps de montée de consigne (*τ_{SOLL}*) étant interprété comme indiquant un débit d'un produit conducteur magnétique (11), et
une erreur de mesure (F) dépendant de l'écart étant déterminée sur la base d'un écart (*Δτ*) entre le temps de montée actuel (*τ_{IST}*) et le temps de montée de consigne (*τ_{SOLL}*), et le débit volumique ou massique actuellement mesuré (*Φ_{IST}*) du produit conducteur magnétique (11) étant corrigé de telle sorte à compenser l'erreur de mesure (F).

2. Procédé selon la revendication 1,
pour lequel le temps de montée de consigne (*τ_{SOLL}*) est déterminé pendant une phase d'étalonnage.

3. Procédé selon la revendication 1 ou 2,
pour lequel temps de montée de consigne (*τ_{SOLL}*) est déterminé pendant la phase d'étalonnage en fonction du produit non-conducteur magnétique (11) et/ou en fonction du système de mesure de débit, constitué d'un tube de mesure (2) et d'un système d'aimants (6, 7).

4. Procédé selon la revendication 1,
pour lequel est déterminé au moyen du temps de montée actuel (*τ_{IST}*) et du temps de montée de consigne (*τ_{SOLL}*), un facteur de correction avec lequel le débit volumique ou massique (*Φ_{IST}*) actuellement déterminé est corrigé.

5. Procédé selon la revendication 1,
pour lequel est utilisé un produit non-conducteur magnétique comme produit de référence (Ref).

6. Procédé selon la revendication 5,
pour lequel est utilisé de l'eau comme produit de référence (Ref).

7. Procédé selon la revendication 1,
pour lequel le temps de montée actuel (*τ_{IST}*) est déterminé sur plusieurs périodes du champ magnétique (B(t)) alternant périodiquement.

8. Procédé selon la revendication 1,
pour lequel est déterminé et affiché, au moyen d'une comparaison entre le temps de montée actuel (*τ_{IST}*) jusqu'à l'atteinte du champ magnétique de mesure (*B_{const}*.) et le temps de montée de consigne (*τ_{SOLL}*) correspondant, la part de matériau conducteur magnétique dans le produit (11) s'écoulant à travers le débitmètre (1).

9. Dispositif destiné à la mesure du débit volumique ou massique d'un produit conducteur magnétique (11), qui s'écoule à travers un tube de mesure (2) en direction de l'axe de tube de mesure (3), avec un système d'aimants (6, 7) qui génère un champ magnétique (B(t)) traversant le tube de mesure (2), pour l'essentiel perpendiculairement à l'axe de tube de mesure (3) et changeant périodiquement la direction, avec au moins une électrode de mesure (4, 5) couplée avec le produit (11), laquelle électrode est disposée dans la zone du tube de mesure (2), et avec une unité de régulation / d'exploitation (8), **caractérisé**
**en ce que** l'unité de régulation / d'exploitation (8) détermine au moyen de la tension de mesure (U) induite dans l'au moins une électrode de mesure (4, 5) des informations sur le débit volumique ou massique (Φ) du produit (11) selon le procédé décrit dans au moins l'une des revendications 1 à 8.
